# EUROPEAN PATENT APPLICATION

(11) **EP 2 530 635 A1**
(43) Date of publication of application: **05.12.2012**
(21) Application number: 11305676.6
(22) Date of filing: 01.06.2011
(51) Int. Cl.: G06Q 10/00

(54) **Method and system for optimizing revenue management in a travel environment**

(71) Applicant: Amadeus S.A.S., 06410 Biot (FR)
(72) Inventor: Bourla Brigitte, 06600 Antibes (FR)
(74) Representative: Anderson, Angela Mary

(57) **Abstract**

A method of allocating capacity in a vehicle, such as an airplane, which vehicle has a scheduled departure time and a predetermined starting and finishing location and wherein the capacity comprises an inventory of passenger spaces which can be sold to a user, the method comprising:
- determining at a predetermined time before the scheduled departure time, the number of currently available passenger spaces;
- determining if any of the available passenger spaces can be made available for alternative uses;
- receiving a request for available capacity in the vehicle from a third party to carry a load of cargo having a measure;
- converting the available passenger spaces into an equivalent load having said measure based on a predetermined conversion factor;
- allocating the equivalent load a required capacity;
- updating the number of available passenger spaces now available in the inventory on the basis of the equivalent load and the conversion factor.

## Description

### Field of the invention

The present invention relates to a design method and system for optimizing revenue management, particularly, but not exclusively in the field of inventory management for a travel environment.

### Background of the invention

Airline companies have developed the business of transporting passengers from one airport to another in a wide variety of aircraft types, offering different operational capacities. The airplane can have structural limitations in terms of the weight carried and the range it can reach, and are defined as elements of certification. The operating airline can still make choices related to the commercial items impacting the possible payload, such as seats, catering, galleys etc.

Payload includes the number of passengers and their baggage as well as any possible additional cargo that can be carried in the hold of the airplane where baggage is stored, either as bulk load or Unit Load Device (ULD) or pallets. Most airline companies transporting passengers may also offer cargo services. In addition, certain airplanes may be fully dedicated to this activity.

Cargo products may vary in weight, volume and density. Examples of cargo on passenger flights include sealed, cold-chain handling for medication, perishable or limited shelf-life products, sealed drums of liquid or powder, high-value items of variable size and packaging, live animals, etc.

Passenger and cargo transportation each present different demands and requests. An airline handling passenger transportation will offer seats on a flight to a passenger based on the required itinerary. Demand varies depending on seasons, type of travel, etc. In the case of type of travel a business trip tends to follow short-term booking trends whilst a leisure trip shows different types of booking trend.

Cargo patterns are influenced by other factors. The cargo carrier offers a wide variety of types of capacity, as the demand is more service-linked and not specifically linked to an itinerary. For example, freighters, shipping or truck companies, rail, agreements with other airlines, dedicated cargo scheduled flights or hold space in passenger flights may influence available resources for a cargo carrier. Sales are generally based on contracts with specific allotments and most ad-hoc sales are short-term bookings.

For space in the hold of a passenger flight, available capacity is generally known during the operational windows when a list of booked passengers is communicated to an airport operational system such as a Departure control system (DCS). The operational window is typically 2-3 days before the flight departures. For cargo, exchange of information is manual such as by teletype and the like and is upon request of a cargo manager.

This process is manual and driven by a cargo manager associated with the airport trying to facilitate the movement of cargo to appropriate destinations and within required timescales by using any available space on flights departing in the next few days. Facilitating the sale of cargo space on this basis is somewhat hit and miss. When there is available space and cargo does not ask for the space; or cargo asks for space and the request cannot be accommodated, there is a loss of potential revenue and often delays in getting cargo to its required destination.

Since the 1980s and the deregulation of the airline industry, airlines have invested in information systems and improved their financial performance with the use of revenue management processes and systems. Revenue management can be defined as "maximizing passenger revenue by selling the right seats to the right customers at the right time". Analysis of historical fares and sales data or passenger demand trends lead to forecasts and calculations to maximize profitability of flights, routes and network of the airline, and produce the assumptions based on the willingness within the market to pay different prices. This always then results in an optimal mix of inventory for a particular situation. The inventory is the number of seats available for all booking classes on a given flight, with seasonal variations and differences for the various channels and points of sales. The revenue management systems calculations dynamically define a bid price in an Origin and Destination method and, when fare ranges correspond to booking classes, controls are set at the inventory level to define availability offered to a Global Distribution System (GDS) or to direct channels.

Revenue management has been proposed for the management of cargo services, although there is not yet a wide penetration. There are similarities between these cargo proposals and the traditional passenger approach. The cargo inventory is perishable in the same way as the passenger inventory. Unsold space and seats are lost sales once the flight is departed. Both passenger and cargo revenue managers are trying to sell inventory at the highest values. Air cargo is mainly a business-to-business market. Moreover, freight delivery companies must also manage their assets carefully to optimize use and maximize revenue. Cargo carriers and managers also make booking decisions based on the committed allocated space from allotment contracts.

In practice, a passenger flight allocates space to passengers as the first priority and cargo as the second. The cargo capacity at departure time is any space that is still available. A passenger demand forecast is not provided to cargo managers and ground handling will focus on minimizing offload for the cost it generates.

The planning possibilities for cargo and more importantly overall profitability decision cannot be made for a flight, as passenger and cargo decisions are handled independently. This is particularly sensitive when the load factor of passengers is low in the weeks preceding departure which can give rise to lost sales on flights departing with wasted space.

The internet has changed passenger buying behavior which can make confirmation of weak demand difficult to measure as current revenue management systems are channel indifferent. In the weeks preceding departure, assessment of the potential sales of cargo in the hold space is not made. Instead, a traditional way to address the issue of load factor of a given flight is to involve a passenger tariff manager in introducing last-minute passenger promotional fares. This gives priority to a load factor and does not take a holistic approach to the revenue that could be generated from the same flight. As a result, flights can often depart with a non-optimum global revenue.

Organization of the airline business, strongly split between passenger and cargo services, has not embraced any attempt to provide an overall Revenue management system covering both aspects for a given passenger flight. This difficulty is made worse, by having to also determine the information necessary to make effective decisions.

The white paper "A look at Cargo Revenue Management" (Sabre Inc: 2004) discusses the principles of revenue management as applied to cargo and proposes an optimization method. The white paper discusses the various considerations that are taken into account when planning and managing the allotment of space for cargo. In addition, the white paper indicates some of the fundamental differences between cargo and passengers in terms of revenue management. One such factor is uncertain capacity which is continually changing up to departure, whilst passenger capacity is less variable. Another important factor is the fact that cargo is allocated "space": weight, volume and position anywhere that is available within the airplane. Passengers on the other hand have a seat which fixed in terms of location and space. A further factor is the difference ways of determining bid price, where cargo takes into consideration different metrics to define and measure the bid price. Many other factors are considered and discussed, with the conclusion that passenger and cargo revenue management systems are very different. The paper also concludes it is possible to apply revenue management techniques to both passengers and cargo but these are not a common system.

The article "Revenue management for the whole aircraft: coordination acceptance decisions for passenger and cargo transportation" (Jamieson Graff, Journal of pricing and revenue management, volume 7, number 4, December 2008, pages 397 to 401) discloses a framework for coordinating passenger and cargo access to aircraft capacity through the use of displacement based transfer prices. This paper discloses independent passenger and cargo optimizations conducted at the start of a timetable period which identifies prices that the passenger revenue management team and the cargo revenue management team bid for to obtain their required capacity. Renegotiation of the bid prices and allocation can occur as the departure date approaches in order to ensure a reliable allocation plan. The framework is organizationally challenging although conceptually and technologically simple.

US2006/015396 discloses a method for optimizing use of shipping space and maximizing the revenue of any cargo. This is achieved by an automatic process which uses scaled values of volume or weight and linear programming. This document makes a reference to passengers but does not disclose a system in accordance with the present invention.

### Objects of the Invention

It is an object of the present invention to overcome at least some of the problems associated with the prior art.

It is a further object of the present invention to automatically manage cargo sales on a passenger flight.

It is a further object of the present invention to provide a method and system which enables the integration of revenue management of cargo with the revenue management of passenger sales.

### Summary of the invention

The present invention provides a method and system as set out in the accompanying claims.

According to one aspect of the present invention there is provided a method of allocating capacity in a vehicle, such as an airplane, which vehicle has a scheduled departure time and a predetermined starting and finishing location and wherein the capacity comprises an inventory of passenger spaces, such as seats which can be sold to a user, the method comprising: determining at a predetermined time before the scheduled departure time, the number of currently available passenger spaces; determining if any of the available passenger spaces can be made available for alternative uses; receiving a request for available capacity in the vehicle from a third party to carry a load of cargo having a measure; converting the available passenger spaces into an equivalent load having said measure based on a predetermined conversion factor; allocating the equivalent load a required capacity; updating the number of available passenger spaces now available in the inventory on the basis of the equivalent load and the conversion factor.

Optionally, comparing a revenue for one or more passenger spaces with the equivalent load to determine which will yield the highest revenue.

Optionally, the conversion step comprising applying the conversion factor to the available passenger spaces to convert the available passenger spaces to an equivalent weight or volume of cargo.

Optionally, selling cargo space in preference to passenger spaces when the cargo space generates the highest revenue yield.

Optionally, determining the number of currently available passenger spaces occurs during an operational window.

Optionally, requesting if cargo availability is required.

Optionally, allotting a predetermined number of passenger spaces for use to satisfy a load of cargo.

Optionally, applying business rules to control the conversion and allocation.

The present invention offers many advantages over current systems and methods. The module at the centre of the invention enables the conversion of seats into weight or volume to accommodate cargo. The conversion opens up alternative revenues streams to enable the revenue management system to maximize revenue. In addition by comparing the weight and volume of cargo with passenger numbers means that uptake of space is improved. Thus the flight is less likely to depart with sub-optimal loads or revenues. The fact that the consideration of accommodating cargo in a passenger flight is made before the so called "operational window" is open is counter intuitive. Traditionally the operational window allows sales of cargo at the last minute. Cargo is not generally considered as an alternative source of revenue for space which would typically be used as part of a passenger inventory. In fact the present invention enables sales of cargo to take precedence over sales of seats where the value equation is preferential.

### Brief description of the drawings

Reference will now be made, by way of example, to the accompanying drawings, in which:
Figure 1 is a block diagram of a passenger side booking overview, in accordance with an embodiment of the invention, given by way of example;
Figure 2 is a block diagram of a system for optimizing passengers and cargo, in accordance with an embodiment of the invention, given by way of example;
Figure 3 is a flow chart of a first embodiment of a communication process between a passenger service and a cargo service, given by way of example;
Figure 4 is a flow chart of a second embodiment of a communication process between a passenger service and a cargo service, given by way of example; and
Figure 5 is a flow chart of a third embodiment of a communication process between a passenger service and a cargo service, given by way of example.

### Detailed description of the preferred embodiments

The present invention relates to an optimized module which includes yield and passenger forecasts to calculate the best revenue that can be achieved for a specific flight. The invention also takes into consideration the available space for cargo and how the provision of space for cargo can be optimized along with the other needs of the flight. Cargo is a load carried on a flight which can be measured in weight, volume or any other appropriate measure. The present invention is not a computer implemented version of prior art systems, but instead a novel and inventive way of approaching the management and allocation of capacity, revenue and customers using a technical analysis and process.

The present invention is directed towards the management and allocation of space on an airplane. It will be appreciated that the invention could apply to any other type of vehicle where passenger space such as seats and/or cargo space are made available for sale and can be converted from one type to the other.

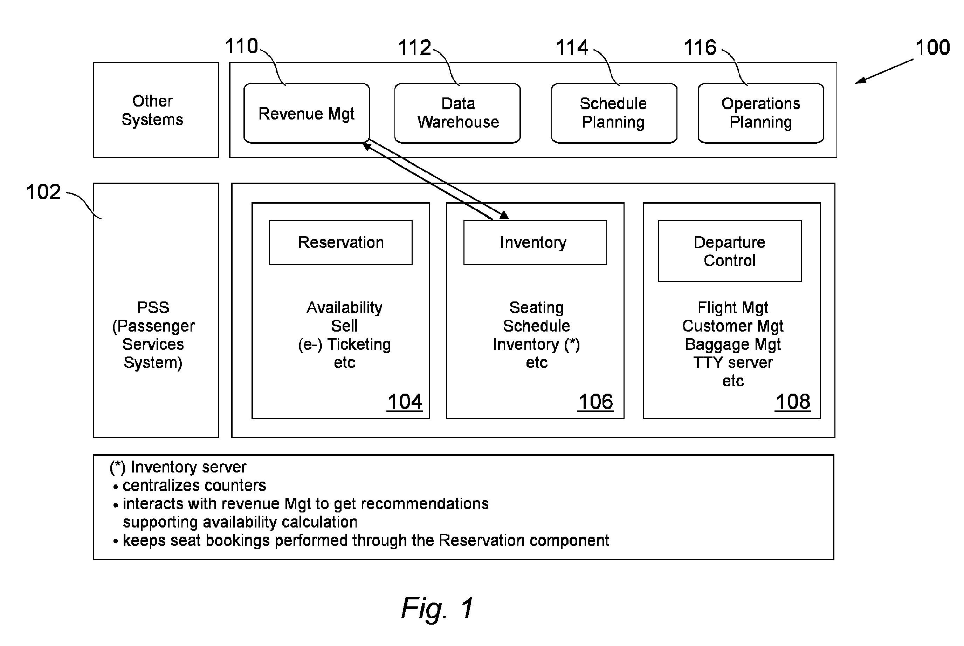

Figure 1 is a simplified view of a flight management system 100. The systems illustrated are non-exhaustive and are shown to illustrate the context in which the invention can operate. A passenger service system (PSS) 102 is an important element of the system and includes the reservation processes 104, inventory processes 106 and departure control processes 108. Other systems include a revenue management system 110, a data warehouse system 112, a schedule planning system 114 and an operations planning system 116. Most of these systems and processes will not be described in detail herein, but the functions thereof will be clear to the person skilled in the art.

Of particular interest to the present invention are the inventory processes 106 and the revenue management system 110. The inventory processes manage the seating allocation of passengers based on the schedule of available flights and the possible inventory available. The inventory is in turn operated on a server which interacts with the revenue management system in order to determine recommendations and calculate revenue based on the different recommendations to maximize uptake of seats and to maximize revenue. The interaction between the inventory processes and the revenue management system is used and adapted as will be described below to contribute to the method and system of the present invention.

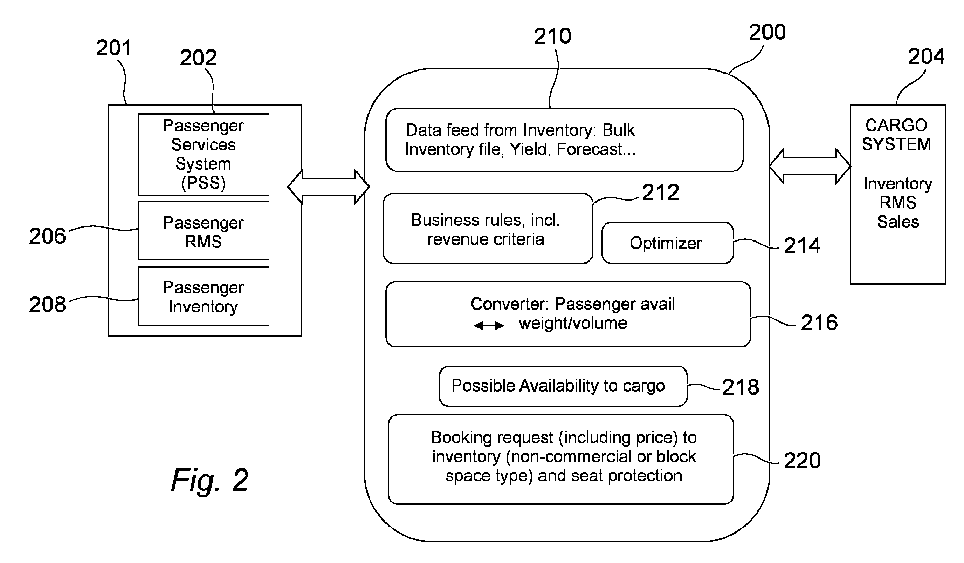

Referring now to figure 2 an overview of a passenger and cargo management module 200 is shown. The management module 200 is in contact with a passenger system 201 and a cargo system 204. The passenger system 201 includes the passenger services system 202, the revenue management system 206 and the inventory processes 208. Similarly, the cargo system 204 includes an inventory, a revenue management system and a sales database. It will be appreciated that both the passenger system 201 and the cargo system 204 may include additional or different functionality.

The passenger and cargo management module 200 includes a data feed 210 from the inventory which gives a bulk inventory file, yields, forecasts and any other relevant information. The data feed from the inventory is updated regularly. The management module 200 also includes a business rules module 212 which includes revenue criteria and an optimizer module 214 which is used to optimize revenue. The management module 200 also includes a converter 216 which calculates the comparison between passenger availability and weight or volume of cargo that is equivalent thereto. This converter 216 is a novel and inventive part of the present invention and will be described in more detail below. The management module 200 also includes a module 218 for measuring the possible availability of space for cargo and a module 220 for managing booking requests including price optimization and seats allocation by use of particular methods. The module 218 for measuring the possible availability of cargo is capable of working in a "push" mode or in a "pull" mode.

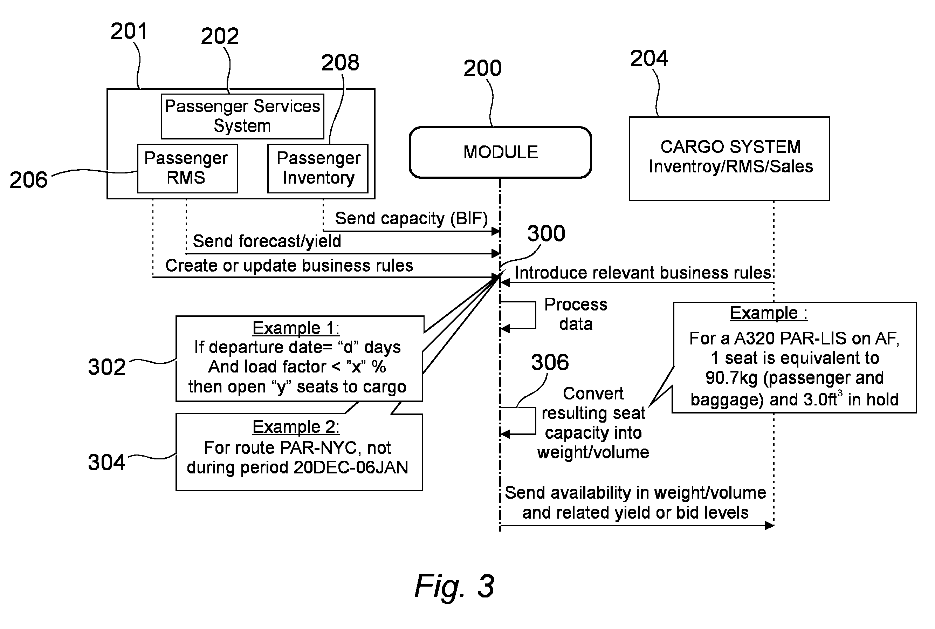

Figure 3 shows an information flow relating to pre-calculations to determine whether cargo sales are possible for a particular flight. The flow diagram describes the periodic data push from the passenger system 201 to the management module 200 and the availability of pre-calculation using business rules created in the management module 200, from the inventory processes 206 and the revenue management system 208. The final results from the pre-calculation can be pushed to a cargo system on a defined periodic basis, for example at the end of the pre-calculation. This allows the cargo system 204 to assess the available space and price to determine whether to take up any space on the flight. In an alternative situation the cargo system 204 can request if available space can be obtained and at what price. This will be described below.

Figure 3 shows the details of communications between the management module 200, the passenger system 201 and the cargo system 204. The passenger inventory 208 sends capacity information to the management module 200 by the data feed 210 and the passenger revenue management system 206 sends an associated yield and forecast. The passenger services system 202 creates and updates business rules to provide to the management module 200 to enable the module to effect the necessary calculations and conversions. The cargo system 204 may also introduce relevant business rules either at the request of the module or by sending the business rules where the cargo system is pushing a request.

As previously described, in a traditional booking management engine, an operational window for a flight opens two to three days before departure of the flight. This operational window is the point in time where the DCS type systems in the airport takes control of the inventory, ticket changes, further sales or any other functions. This can include allocation of space to cargo where available. However, this is not very helpful to just sell cargo space in the operation window, since cargo requirements are often known two to three weeks before departure of the flight. Trying to allocate cargo in the operational window of two to three days is more difficult than necessary since the cargo requirements have often been known for some time before the operational window became active.

The present invention takes a different approach: at a certain point in time the number of seats already sold is known and the expected further take-up of seats can be predicted from trends and forecasts and from business rules. As a result, at any time before the operational window, the present invention adopts a different approach to allocation of remaining space on a flight.

Returning to figure 3, the management module 200 at point 300 is aware of the current capacity of the particular flight. In addition, the expected revenue is also available. From the forecast yield and business rules the module 200 can determine the available seats on the flight. Example 1, 302, deals with the situation where the flight will depart in a certain number of days and at present the flight is loaded to a predetermined percentage (x). If this is the case, the business rules and the current capacity levels release a predetermined number (y) of seats which can be made available to carry cargo. Once the decision has been made the module 200 can then go on to determine revenue obtainable by releasing these seats (y) for cargo and compare that with the revenue that would otherwise be attained. The passenger services system 202 may provide other business rules such as that shown in example 2, 304, in which the module is prohibited from making seats available for cargo during specific periods such as Christmas. Business rules could include many different examples which may be used in combination one with another or individually.

Assuming a certain number of available seats have been identified which can be used for other purposes, the module 200 carries out a conversion at step 306. This conversion assumes that one passenger in a seat is equivalent to a certain weight or volume. For example an average person and their baggage may weigh 90.7 kg. Alternatively, a passenger and their baggage may be equivalent to 3 foot cubed of space in the hold.

Once the equivalent of a passenger and their baggage has been converted into an appropriate weight or volume the module sends an indication of the available cargo space or weight to the cargo system 204. An associated price is also included. The price is calculated so that the revenue management system requirements for sales of space on the flights are met. The cargo system 204 then considers the available space and price and decides whether to accept or not. If the cargo system 204 accepts the available space at the price quoted, the management module 200 will update the passenger inventory 208 and the revenue management system 206 will update the forecast or yield for that flight.

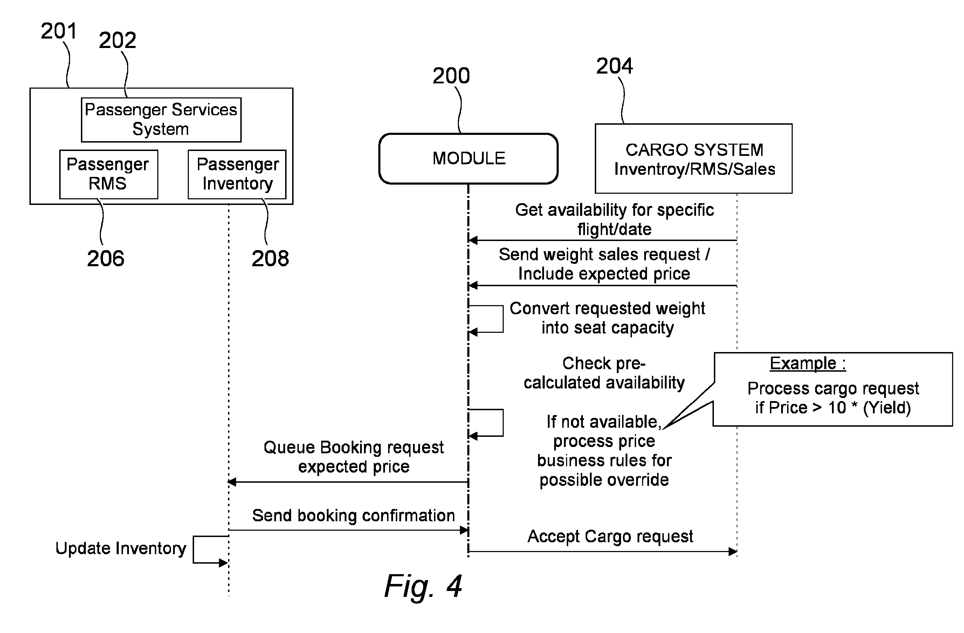

The figure 4 shows a diagram of the interaction between the cargo system 204 and the management module 200, where the cargo system 204 is requesting availability for specific flights or dates. The management module 200 then interfaces with the passenger services system 202 to determine whether the request of the cargo system 204 can be met.

In a first instance the cargo system 204 contacts the management module 200 to determine whether there is availability for a specific flight or date. Assuming there is availability, the cargo system 204 then proceeds to send a request for a certain weight or volume of cargo, including an expected price that the cargo system 204 is prepared to pay. The management module 200 converts the requested weight or volume into an equivalent seat capacity using the conversion factors mentioned above.

The module 200 then compares the requested capacity for cargo with the pre-calculated availability from the passenger services system 202. Business rules are also taken into consideration. The business rules may include a comparison of the expected proposed price compared with the expectation of what might be achieved by sales of seats and then a determination as to whether the proposed price is sufficient to satisfy the required yield of revenue for the flight. Other business rules may include an indication of non-availability where the request is above a predetermined weight or volume. Business rules may apply other restrictions such as non-available dates and times where it is known that a high uptake of last-minute passenger sales may offer a more advantageous revenue level. If the requested weight or volume capacity is available, the management module 200 will then send a booking request including the proposed expected price to the passenger services system 202. The passenger services system can then apply this requested booking to determine whether the revenue management system and inventory can handle this capacity. If the passenger services system are prepared to accept the booking, a booking confirmation is sent to the management module 200 and the inventory is updated to indicate the sale of the equivalent number of seats required by the cargo booking. The management module 200 then sends an acceptance to the cargo system 204 and the cargo system 204 can then load the cargo at the appropriate time.

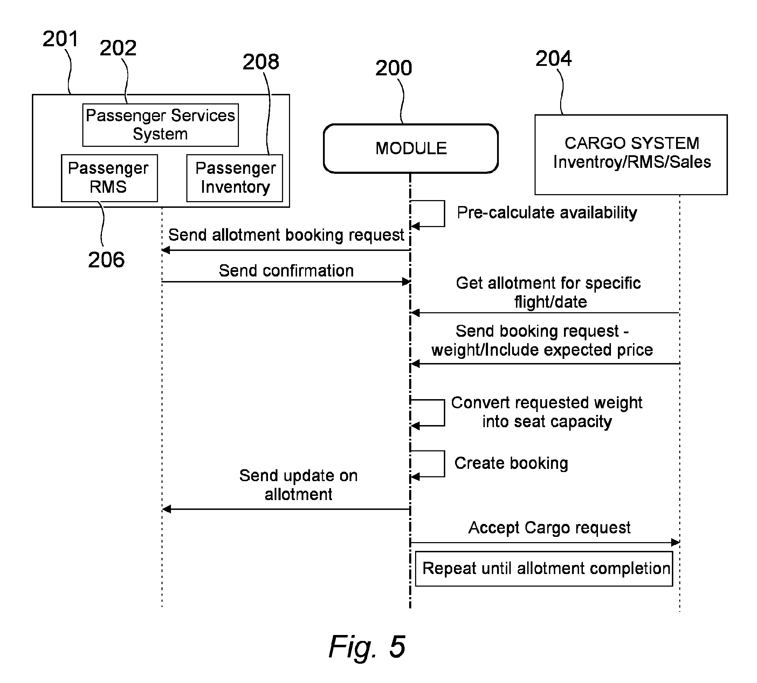

Figure 5 shows a message flow for a further embodiment in which the module 200 blocks an allotment of space for cargo after the availability pre-calculation 500 has been made. Cargo sales can then be made against the allotment as will be described below. Once the module 200 has pre-calculated the availability, the module 200 sends a request to the passenger services system 202 to consider an allotment booking for cargo. If the allotment booking meets the passenger revenue management system requirements and there is sufficient inventory available to allocate the allotments, the passenger services system 202 will send a confirmation message to the module 200. This allotment of space will be stored in the module until a request is made for space from the cargo system.

The cargo system 204 sends a request to determine whether there is any available allotment of space for a specific flight or date. The cargo system 204 will then send a booking request including weight or volume and an associated expected price to pay. As indicated in previous embodiments, the module 200 will convert the requested weight or volume into an equivalent seat capacity. A booking will be created and a notification will be sent to the passenger services system 202. The notification will include details of the number of seats required and the expected price the cargo system 204 is prepared to pay. The passenger services system 202 will then consider the allotment and notify the module 200. The passenger services system 202 may accept the cargo requests assuming the requirements of the revenue management system and the inventory of the passenger services system are met. The allocation of allotment can continue until all the available allotment has been used by the cargo system 204.

It will be appreciated that various combinations of the features and steps illustrated in figures 3, 4 and 5 may be interchanged one with another to provide any required combination for different applications and examples.

Different Airlines and Aircrafts may have different capabilities in adapting space from passenger space to cargo space and vice versa. The business rules which are used by the module 200 will give the necessary rules and regulations for each airline, flight, date and/or combination of two or more of these.

The system and method could be managed from the opposite sense, where cargo space is made available on cargo planes for passengers in times of high passenger uptake and low cargo requirements.

The present invention has been described with reference to both software programs and applications and hardware modules. It will be appreciated that the functions carried out as part of the invention could be carried out in either software or hardware modules or any combination thereof, irrespective of the examples given herein.

It will be appreciated that there are many variations of the various features described above, which can fall within the scope of the present invention.

## Claims

1. A method of allocating capacity in a vehicle, such as an airplane, which vehicle has a scheduled departure time and a predetermined starting and finishing location and wherein the capacity comprises an inventory of passenger spaces, such as seats which can be sold to a user, the method comprising:
- determining at a predetermined time before the scheduled departure time, the number of currently available passenger spaces;
- determining if any of the available passenger spaces can be made available for alternative uses;
- receiving a request for available capacity in the vehicle from a third party to carry a load of cargo having a measure;
- converting the available passenger spaces into an equivalent load having said measure based on a predetermined conversion factor;
- allocating the equivalent load a required capacity;
- updating the number of available passenger spaces now available in the inventory on the basis of the equivalent load and the conversion factor.

2. The method of claim 1, further comprising comparing a revenue for one or more passenger spaces with the equivalent load to determine which will yield the highest revenue.

3. The method of claim 1 or claim 2, wherein the conversion step comprising applying the conversion factor to the available passenger spaces to convert the available passenger spaces to an equivalent weight or volume of cargo.

4. The method of claim 3, further comprising selling cargo space in preference to passenger spaces when the cargo space generates the highest revenue yield.

5. The method of any preceding claim, wherein determining the number of currently available passenger spaces occurs at any time before an operational window.

6. The method of any preceding claim, further comprising requesting if cargo availability is required.

7. The method of any preceding claim, further comprising allotting a predetermined number of passenger spaces for use to satisfy a load of cargo.

8. The method of any preceding claim, further comprising applying business rules to control the conversion and allocation.

9. A system for allocating capacity in a vehicle, such as an airplane, which vehicle has a scheduled departure time and a predetermined starting and finishing location and wherein the capacity comprises an inventory of passenger spaces which can be sold to a user, the system comprising a management module in communication with an accommodation unit management system and a cargo management system wherein the management module:
- determines at a predetermined time before the scheduled departure time, the number of currently available passenger spaces and if any of the available passenger spaces can be made available for alternative uses;
- receives a request for available capacity in the vehicle from the cargo management system to carry a load of cargo having a measure;
- converts the available passenger spaces into an equivalent load having said measure based on a predetermined conversion factor; and
- allocates the equivalent load a required capacity; and wherein the accommodation unit management system is requested to:
- update the number of available passenger spaces now available in the inventory on the basis of the equivalent load and the conversion factor.

10. The system of claim 9, where the module compares a revenue for one or more passenger spaces with the equivalent load to determine which will yield the highest revenue.

11. The system of claim 9 or claim 10 wherein the conversion factor is applied to the available passenger spaces to convert the available passenger spaces to an equivalent weight or volume of cargo.

12. The system of any of claims 9 to 11, where cargo space is sold in preference to passenger spaces when the cargo space generates the highest revenue yield.

13. The system of any of claims 9 to 12 wherein the number of currently available passenger spaces is determined at any time before the operational window.

14. The system of any of claims 9 to 13, wherein the modules request if cargo availability is required.

15. The system of any of claims 9 to 14, wherein a predetermined number of passenger spaces are allocated for use to satisfy a load of cargo.

16. The system of claims 9 to 15, wherein business rules are used to control the conversion and allocation.

17. A computer program comprising instructions for carrying out the steps of the method according to any one of claims 1 to 8, when said computer program is executed on a computer system.
